Europäisches Patentamt

European Patent Office

Office européen des brevets

(11) Publication number: 0 369 106 A1

# EUROPEAN PATENT APPLICATION

(21) Application number: 89111340.9

(22) Date of filing: 22.06.89

(51) Int. Cl.⁵: B65G 67/02

(30) Priority: 14.11.88 US 270746

(43) Date of publication of application:
23.05.90 Bulletin 90/21

(84) Designated Contracting States:
DE FR GB IT

(71) Applicant: RITE-HITE CORPORATION
9019 N. Deerwood Drive
Milwaukee Wisconsin 53223(US)

(72) Inventor: Trickle, Glen
1441 Pheasant Run Drive No 103
Racine Wisconsin 53406(US)

(74) Representative: Hoeger, Stellrecht & Partner
Uhlandstrasse 14 c
D-7000 Stuttgart 1(DE)

(54) Loading dock position sensor.

(57) A loading dock signal and control system is provided which includes a sensing unit mountable proximate to the loading dock for measuring and indicating progressively shorter distances between the dock and a backing vehicle. A signal unit (30), responsive to indications from the sensing unit (20), is mountable proximate the loading dock and is detectable by an operator of the backing vehicle.

FIG. I

## LOADING DOCK POSITION SENSOR

BACKGROUND OF THE INVENTION

This invention relates to a loading dock signal and control system and more particularly to a system which is readily operable and provides visual signals to guide vehicle operators into a safe position adjacent the loading dock and prevent damage to the vehicle, loading dock equipment, and/or the building structure.

Devices have heretofore been provided for releasably securing parked vehicles at a loading dock for the purpose of preventing movement of the vehicle during loading and unloading operations by dock personnel. Examples of such releasable vehicle restraint devices are disclosed in U.S. Patent Nos. 4,208,161, 4,264,259, 4,282,621, 4,373,847, 4,443,150, and 4,560,315. After a vehicle is backed into position adjacent the loading dock, the locking members of such vehicle restraints are activated to lockingly engage a safety bar, commonly referred to as an ICC bar, which depends from the rear of the vehicle. Light panels located on either side of the loading dock have heretofore been used to provide vehicle drivers with a visual indication as to their position relative to the sides of a selected loading dock. In the practical implementation of the use of such vehicle restraints and light panels, certain problems may occur with regard to safety, more particularly in that vehicle operators may sometimes overestimate or underestimate the remaining distance to the loading dock as they back in. An overestimate of the remaining distance by the driver may result in the vehicle impacting the building structure with excessive force causing damage to the vehicle, loading dock equipment, or building. An underestimate of the remaining distance may result in the vehicle being parked in an unsafe position that exceeds the operating range of a releasable vehicle restraint.

SUMMARY OF THE INVENTION

Thus it is an object of the invention to provide a readily operable loading dock signal and control system having maximum safeguards to insure the safety of operating personnel and to prevent damage to vehicles, loading dock equipment, and the building structure.

A further object of the invention is to provide visual signals indicating the distance between the loading dock and vehicle in order to safely guide vehicle operators into a properly parked position adjacent a loading dock.

Further and additional objects will appear from the following description, accompanying drawings, and appended claims.

These objects are accomplished in accordance with this invention by providing a signalling and control system for vehicle loading docks comprising a sensing means mountable proximate to the loading dock for measuring the distance between the loading dock front wall and the rear of a vehicle backing towards the loading dock. The system includes a signal means which exhibits visual or audible signals or indicia to the vehicle operator indicating the distance determined by the sensing means between the rear end of the backing vehicle and the dock front wall. This system provides accurate and reliable feedback to the vehicle driver which facilitates safe maneuvering of the vehicle during parking thereof. The system may be interfaced with a releasable vehicle restraint device to automatically activate the locking member of the vehicle restraint from its unlocked to locked position when the sensing means senses that the rear of the vehicle is within an effective operating range of the releasable vehicle restraint. The system may also include one or more light panels mountable on one side or both sides of the loading dock to provide the driver with additional guidance for properly locating the vehicle relative to a dock leveler installed in the loading dock.

DESCRIPTION

For a more complete understanding of this invention reference should now be made to the drawings, wherein:

Fig. 1 is a fragmentary perspective view of a loading dock showing incorporated therein one embodiment of the signal and control system exemplifying the invention.

Fig. 2 is an elevational view of one type of signal means included in the signal and control system shown in Fig. 1.

Fig. 3 is similar to Fig. 2 but showing a second embodiment of the signal means.

Fig. 4 is similar to Fig. 2 but showing a third embodiment of the signal means.

Fig. 5 is similar to Fig. 1 but showing a second embodiment of the signal and control system exemplifying the invention.

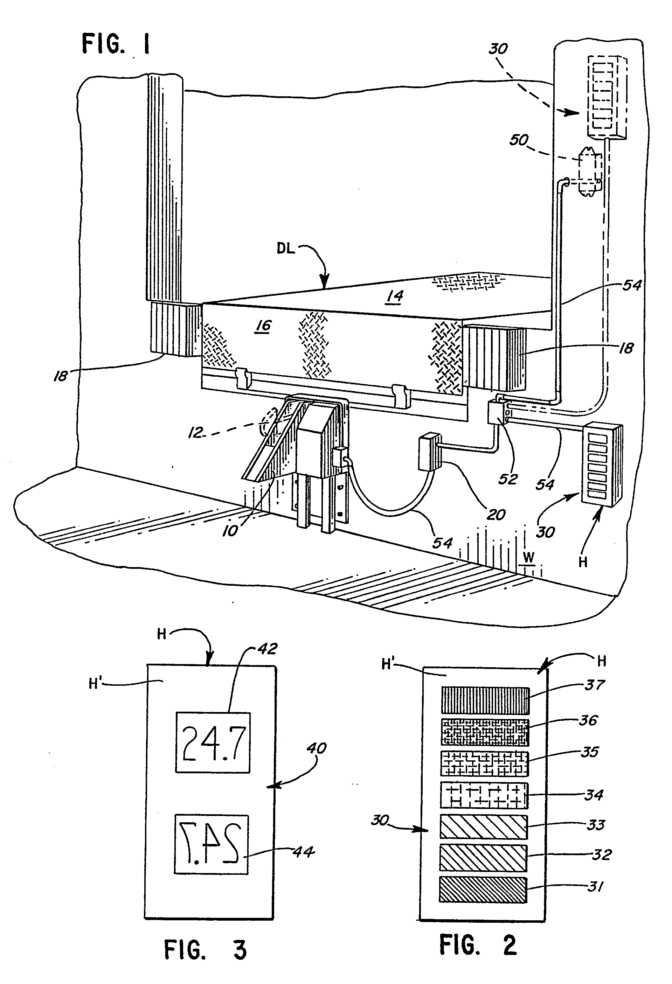

Referring now to the drawings, Fig. 1 generally shows a vehicle loading dock with a releasable vehicle restraint 10 mounted on the front vertical wall W of the loading dock. The vehicle restraint includes a locking member 12 adjustable between a lowered vehicle release position and a raised vehicle engage position, the latter being shown in phantom lines. When the member 12 is in the raised (operative) position the ICC bar of the parked vehicle is engaged, thus preventing the vehicle from accidentally or inadvertently moving away from the dock. The loading dock normally includes a dock leveler, DL, the latter being disposed within a pit formed in the dock. The vehicle restraining may be of a type disclosed in U.S. Patents Nos. 4,264,259, 4,282,621, 4,443,150. In addition to the vehicle restraint, the dock leveler is provided with a loading ramp or dockboard 14 having the rear edge thereof pivotally connected to a frame member, not shown, disposed within and adjacent to the rear of the pit, and a hingedly mounted lip extension or plate 16 which is connected to the front edge of the ramp and is adapted to be independently pivoted to an extended outwardly projecting position thereby bridging a gap between the loading ramp front edge and the bed of the parked vehicle. A pair of bumpers 18 is mounted on the dock wall W and the bumpers are disposed on either side of the loading ramp 14, see Fig. 1.

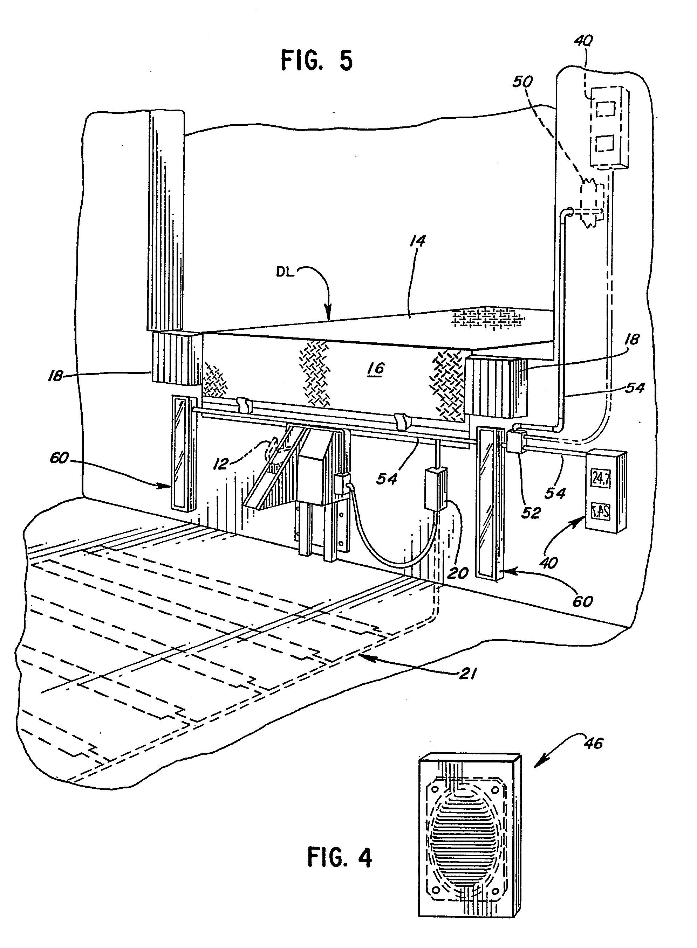

A sensing unit 20, such as a proximity sensor, is mounted on or proximate the dock wall W and is adapted to measure the distance between the dock wall and the rear of a vehicle as the operator maneuvers the vehicle into a parked position adjacent the dock wall W. When in the parked position, the rear of the vehicle bed will abut the bumpers 18. The sensing unit 20 measures the distance between the rear end of the vehicle and loading dock by emitting sound waves of an appropriate frequency, for example in the ultrasonic range, and then receiving and measuring the sound waves that reflect back off the rear end of the backing vehicle. In the alternative the sensing unit 20 may emit electromagnetic radiation, such as in the ultraviolet, infrared, or visible red spectrum and then receive and measure the radiation reflected off the rear end of the vehicle. As a further alternative, the sensing unit 20 may include a series of inductive loops 21 buried in the driveway approach to the loading dock as shown in Fig. 5 which senses the proximity of metal objects passing thereover and measures the relative position thereof to the dock wall W.

The sensing unit 20 also generates a signal corresponding to the measured distance which is transmitted to a signal unit 30 as will be described more fully hereinafter. The sensing unit 20 may be calibrated to treat a plane spaced in front of and parallel to the dock wall W and within the effective range of the vehicle restraint locking member 12 as the plane of origin from which the distance to the rear end of the backing vehicle is measured.

The signal unit 30 is preferably mounted on the dock wall W and is offset to the right of the right hand bumper so that it may be readily observed by the vehicle operator while in the cab of the vehicle. The unit 30, as seen in Fig. 1, exhibits visual signals or indicia which are generated in response to the impulses from the sensing unit 20. An alternate location for the signal unit 30 may be above the level of the dock platform as shown in phantom lines in Fig. 1.

One embodiment of the signal unit 30 is illustrated in Fig. 2, and includes a housing H, affixed to the dock wall W and having an exposed front panel H$'$ provided with a tier or vertical grouping of light-emitting windows 31-37 which are successively illuminated or energized in response to the decreasing distance measured by the sensing unit 20. The uppermost display window 37 may be colored red, the intermediate display windows 34-36 may be colored yellow, and the lowermost display windows 31-33 may be colored green. As the vehicle moves towards the loading dock and the sensing unit measures decreasing distances between the loading dock and the rear end of the backing vehicle, each of the windows 31-37 will be successively activated or illuminated in ascending order as the vehicle reaches preset distances away from the loading dock. As a result, the signal unit initially exhibits green lights in windows 31-33 while the vehicle is at predetermined long distances from the loading dock, then successive yellow lights appear in windows 34-36 as the vehicle reaches predetermined shorter distances from the loading dock, and finally a red light when the vehicle reaches a safe position adjacent the loading dock bumpers 18 and within the operating range of the releasable vehicle restraint 10.

Another type of signal means is illustrated in Fig. 3 and comprises a panel 40 which shows the distance measured by the sensing means in a numerical character format in one display window 42 and shows the same distance in a mirror image numerical character format in another display window 44 adjacent window 42. The normal numerical character format coupled with the mirror image numerical character format renders the signal means more readable in the driver's mirror. As the sensing means measures decreasing distances between the loading dock and the rear end of the backing vehicle, the display windows 42, 44 exhibit the decreasing measured distances in changing numerical characters until the vehicle reaches a safe parking position adjacent the loading dock bumpers 18 and within the effective operating range of the vehicle restraint 10, at which point the display windows 42, 44 exhibit zero as the remaining distance.

Another type of signal means is illustrated in Fig. 4 and comprises speaker unit 46 for providing audible sounds to the vehicle driver. The audible sounds may be varied in tone or frequency in relationship to the decreasing distance measured by the sensing means. It will be apparent that the signal means may include a combination of the components heretofore described to provide visual and audible signals to the vehicle driver.

A manually operable switching means such as a control panel 50 for activating the sensing means, signal means, and vehicle restraint 10 may be located proximate the loading dock area for easy access to loading dock personnel. The switching means, sensing means, signal means, and vehicle restraint 10 are appropriately connected to a suitable electric power supply through a conventional junction box 52 and conduit 54.

Fig. 5 discloses another embodiment of the loading dock signal and control system which includes a pair of laterally spaced, substantially parallel light panels 60 mounted on the exposed dock front wall W proximate the dock bumpers 18. The spacing between the light panels must be sufficiently wide so that as the vehicle is backing towards the dock, the vehicle operator can observe same through the side-view mirrors attached to opposite sides of the vehicle cab. Thus, the panels 60 clearly illuminate the loading dock area and define the lateral extent thereof to the vehicle operator. The light panels 60 are operatively connected to the switching means and an electrical power source. It will be apparent that the signal means 30 may be combined with one of the light panels 60 into a single unit, for example by having the signal means 30 occupy the top portion of the combined unit.

It will be appreciated that this system is highly versatile in that it may be operated in different modes. In one mode, the switching means may be arranged such that loading dock personnel activate the sensing means and signal means independently of the releasable vehicle restraint 10. Moreover, the sensing means may be preset to operate in a continuous mode wherein a pulse of sonic waves or electromagnetic radiation is intermittently emitted at timed intervals longer than the normal operating pulse rate, such as several seconds, when the sensing means receives no reflected pulse which would indicate that no vehicle is present. In this continuous mode, once the sensing means receives a reflected pulse indicating that a vehicle is approaching, the emission pulse rate of sonic waves or electromagnetic radiation is automatically increased to the normal operating rate. It is to be noted that in another mode, the switching means may be preset to automatically activate the vehicle restraint locking member 12 from its lowered vehicle-release position to the raised vehicle-lock position in response to a signal from the sensing means indicating that the vehicle has reached a predetermined distance from the loading dock which is within the effective operating range of the locking member 12.

From the foregoing it will be seen that a simple readily operable loading dock signal and control system has been provided which produces visual and/or audible signals, indicating the distance between the loading dock and a backing vehicle. The system assists the vehicle operator in safely guiding and directing the vehicle into a properly parked position adjacent the front wall of a loading dock thereby insuring the safety of personnel and equipment.

While particular embodiments and applications of the present invention have been shown, it will be understood, of course, that the invention is not limited thereto since further modifications may be made by those skilled in the art, particularly in light of the foregoing teachings. It is therefore contemplated by the appended claims to cover any such modifications as come within the spirit and scope of the invention.

## Claims

1. A vehicle loading dock signalling and control system comprising
sensing means mountable proximate to a loading dock for measuring and indicating distances between a backing vehicle and the loading dock;
and signal means responsive to indications from said sensing means and noticeable by an operator of the backing vehicles.

2. The system of claim 1 wherein said sensing means emits sound waves and is responsive to the sound waves reflected by the backing vehicle.

3. The system of claim 1 wherein said signal means includes a panel showing numeric characters.

4. The system of claim 1 wherein said signal means includes a panel having a plurality of prearranged light-emitting elements successively activated in response to the indications of said sensing means.

5. The system of claim 1 wherein said signal means produces audible sounds in response to the indications of said sensing means.

6. The system of claim 1 wherein said sensing means emits electromagnetic radiation for measuring the distance between the backing vehicle and the loading dock.

7. A vehicle loading dock signalling and control system comprising
sensing means mountable proximate to a loading dock for measuring and indicating distances between a backing vehicle and the loading dock;

signal means mountable on the loading dock and responsive to indications from said sensing means and producing signals corresponding to said indications,

and illuminated guide means mountable proximate the loading dock for locating a predetermined dock area.

8. A vehicle loading dock signalling and control system comprising

a releasable vehicle restraint mountable on a loading dock and operative to retain a parked vehicle at a predetermined dock location, said restraint including a locking member mounted for movement between a vehicle release position and an vehicle locking position;

sensing means mountable proximate to the loading dock for measuring and indicating progressively shorter distances between a backing vehicle and the loading dock;

signal means responsive to indications from said sensing means and being detectable by an operator of the backing vehicle;

and manually adjustable selective means for activating said sensing means and signal means; when said selective means is in one position of adjustment, said vehicle restraint being responsive to indications from said sensing means upon said vehicle reaching a predetermined distance from the loading dock whereby the vehicle restraint locking member automatically moves from the vehicle release position to the vehicle locking position.

9. The system of claim 7 wherein said sensing means emits sound waves and is responsive to the sound waves reflected by the backing vehicle.

10. The system of claim 8 wherein said sensing means includes a sensing loop positioned in a driveway approach to the loading dock.

11. The system of claim 7 wherein said signal means includes a panel showing numeric characters.

12. The system of claim 7 including illuminated guide means mountable proximate the loading dock and locating a predetermined dock area in which the vehicle restraint is disposed.

FIG. 1

30

50

DL

14

16

54

18

18

12

10

52

54

20

30

54

W

H

H

H'

42

24.7

40

24.7

44

FIG. 3

H'

H

37

36

35

34

33

32

31

30

FIG. 2

**FIG. 5**

**FIG. 4**

| | **DOCUMENTS CONSIDERED TO BE RELEVANT** | | EP 89111340.9 |
|---|---|---|---|

| Category | Citation of document with indication, where appropriate, of relevant passages | Relevant to claim | CLASSIFICATION OF THE APPLICATION (Int. Cl.) 5 |
|---|---|---|---|
| A | DE - B - 1 221 978 (HÜBNER) * Column 1; fig. 1,2 * -- | 1,8 | B 65 G 67/02 |
| A | EP - A2 - 0 192 350 (RITE-HITE CORPORATION) * Abstract; fig. 1 * ---- | 1,8 | |

TECHNICAL FIELDS
SEARCHED (Int. Cl.) 5

B 65 G
G 08 B

The present search report has been drawn up for all claims

| Place of search | Date of completion of the search | Examiner |
|---|---|---|
| VIENNA | 16-02-1990 | PISSENBERGER |